# EUROPEAN PATENT SPECIFICATION

(11) **EP 3 196 565 B1**
(45) Date of publication and mention of the grant of the patent: **29.06.2022**
(21) Application number: 15842424.2
(22) Date of filing: 20.05.2015
(51) Int. Cl.: F24F 12/00, F24F 5/00, F24F 3/00, F24F 3/14, F24F 3/153, F24F 11/65, F24F 11/84, F24F 11/86, F24F 110/10, F24F 110/20

(54) **HEAT PUMP FOR SWIMMING POOLS**
WÄRMEPUMPE FÜR SCHWIMMBECKEN
POMPE À CHALEUR POUR PISCINES

(30) Priority: 19.09.2014 ES 201431358
(43) Date of publication of application: 26.07.2017
(73) Proprietor: Compañia Industrial De Aplicaciones Termicas, S.A., 14550 Montilla (Córdoba) (ES)
(72) Inventor: MOLERO VILLAR, Natividad, 14550 Montilla (Córdoba) (ES); TUBIO HIDALGO, Raul, 14550 Montilla (Córdoba) (ES); ROSA BERLANGA, Francisco, 14550 Montilla (Córdoba) (ES); ZAMORA GARCIA, Miguel, 14550 Montilla (Córdoba) (ES)
(74) Representative: Dehns
(86) International application number: PCT/ES2015/070394
(87) International publication number: WO 2016/042177

(56) References cited:
- WO-A1-03/106898
- DE-A1- 10 027 467
- DE-A1- 10 042 830
- FR-A1- 2 742 216
- GB-A- 2 120 777
- JP-A- 2008 070 097
- US-A- 4 667 479

## Description

### OBJECT OF THE INVENTION

The object of the invention consists of a heat pump for swimming pools which is able to recover heat from the extraction air, exclusively, by means of a reversible mechanical compression refrigeration circuit, which, in addition, allows heat to be dissipated to said extraction air without requiring the use of a remote heat exchanger and of a regulating method.

The present invention thus relates to a mechanical compression refrigeration machine which enables the drying of air of indoor swimming pools and enables the recovery of heat from the extraction air, exclusively, by means of a refrigeration circuit, which is reversible, in order to enable the dissipation of heat without requiring the use of a remote heat exchanger for the operation of the equipment during intermediate periods.

### PRIOR ART IN THE STATE OF THE ART

Various constructive technologies for heat pumps for swimming pools exist.

The simplest constructive arrangements of such equipment are characterized in that they provide, in the air mixture flow, one or more evaporators, wherein the air is refrigerated and dehumidified, in order to then pass through one or more condensers, which recover the condensation heat from the respective refrigeration circuits, heating the air. If additional heating is needed (typically in winter), an auxiliary heating element with energy from an external source is provided, and, typically, hot water from a boiler is used. In order to increase the efficiency of the installation, heat needs to be recovered from the extraction air. In this simple configuration, the recovery of heat between the extraction air flow and the ventilation air flow is carried out outside of the mechanical compression equipment, by means of a heat exchanger, which can adjoin the equipment itself or be installed outside. Thus, for example, equipment is available from manufacturers such as SEDICAL or CIATESA.

The application WO/2003/106898 describes a heat pump for swimming pools, wherein a condenser is integrated in an extraction air flow (with reference numeral 21 in the original document), and which, in situations in which it is not necessary to reheat the air (typically in summer), enables dehumidification in the evaporator while the condensation heat is expelled to the outside.

Another dehumidification technique for swimming pools is based on the use of air conditioning units (ACUS) the dehumidification capacity of which is regulated based on introducing a large flow of (normally drier and colder) air from the outside. These ACUS are larger apparatuses than the heat pumps of swimming pools, given that they treat larger flows of air and integrate in the interior thereof the heat recovery unit between the air flow from the exterior and the extraction air flow, and perform the entire heating of the air by adding external energy. In some cases, this equipment integrates a mechanical compression refrigeration circuit, with which, in accordance with the mode of operation, a partial dehumidification capacity is obtained, by arranging the evaporator of said circuit in the supply air flow, and subsequently heating it in the condenser as in the heat pumps of swimming pools, or branching off the refrigerant flow from the refrigeration circuit to a parallel condenser, arranged in the extraction air flow, if it is not necessary to heat the air (typically in summer). In the mode of operation using all outside air, they run the entire flow of extraction air, before it is expelled by the evaporator of the refrigeration circuit, recovering the heat of said extraction air by means of the condenser arranged in the supply air flow. Systems such as these can be found in the applications WO/2007/095985 and WO/2007/095984. FR-2742216-A, for example, describes a heat pump for swimming pools according to the preamble of claim 1.

None of the cited inventions incorporates reversible mechanical compression refrigeration circuits having the functionality of recovering heat from the extraction air and of dissipating heat to the extraction air depending on the temperature and humidity conditions of the air of the enclosure of the swimming pool.

Each one of these solutions for dehumidifying enclosures of swimming pools has in common the use of air conditioning elements and components (compressors, heat exchangers, fans, dampers, control devices, etc.) which are well known to any person skilled in the art. They differ in the manner in which they provide and regulate the components of the equipment in order to adopt a different number of operating configurations. An operating mode is understood to refer to the form and sequence of implementing the different psychrometric processes of refrigeration, dehumidification, heating of the ambient air, extraction air, ventilation air, air mixture and supply air, and the recovery of heat between the extraction and the ventilation air, and the heating of the water of the swimming pool, as well as the control of same based on the temperature and humidity values of the ambient air of the swimming pool, of the outside air and of the temperature of the basin of water.

### EXPLANATION OF THE INVENTION

By way of explanation of the invention, the present invention, which is defined by the appended claim 1, relates to a device which air conditions the environment of an indoor swimming pool, the main function of which is the dehumidification of the ambient air, but which, in addition, can provide additional refrigeration or heating, which is needed to address the thermal loads of the environment and also heat the water of the swimming pool. The dehumidification is carried out by means of a process of refrigeration of the air to saturation in the evaporator of one or more mechanical compression refrigeration circuits. The condensation heat of said refrigeration circuits is recovered in order to heat the air of the environment or heat the water of the swimming pool. This is why, in the terminology of the building air conditioning sector, this dehumidification apparatuses are known, in particular, as dehumidifying heat pumps or heat pumps for swimming pools, in contrast to equipment that only dehumidifies by mechanical compression, wherein the air is only refrigerated and dehumidified, but the condensation heat is not recovered.

Thus, viewed from a first aspect, there is provided a heat pump for swimming pools, with heat recovery from the extraction air and dissipation of heat to the extraction air by means of a mechanical compression refrigeration circuit, as claimed in claim 1. The heat pump is constructed with the following constituent elements or parts: return fans, supply fans, a refrigeration circuit C1 consisting primarily of a compressor of the circuit C1, an evaporating coil of the circuit C1, a condensing coil of the circuit C1, a refrigeration circuit C2 consisting primarily of a compressor of the circuit C2, an evaporating coil of the circuit C2, a condensing coil of the circuit C2, a refrigeration circuit C3 consisting primarily of a compressor of the circuit C3, an evaporating coil of the circuit C3, a condensing heat exchanger of the circuit C3, a reversible refrigeration circuit CR consisting mainly of a compressor of the recovery circuit, an evaporating/condensing coil of the recovery circuit CR, a condensing/evaporating coil of the recovery circuit CR, an inversion valve of the recovery circuit CR, an electronic control device, an extraction air gate, a ventilation air gate, a 3-way valve of the hot water backup unit which regulates the heat capacity of a hot water backup unit, an ambient air temperature sensor, an ambient air humidity sensor, a ventilation air temperature sensor, a ventilation air humidity sensor, an air mixture temperature sensor, all arranged in relation to the flows of ambient air, extraction air, ventilation air, air mixture and supply air, in such a manner that the ambient air is suctioned by the return fans, a fraction of said ambient air being expelled as extraction air through the extraction air gate, but passing through the condensing/evaporating coil of the recovery circuit CR beforehand, in such a manner that the remaining fraction mixes with the ventilation air, which enters the machine through the ventilation air gate, both air flows forming the air mixture, in such a manner that said air mixture is distributed uniformly in order to pass through the evaporating coil of the circuit C1, the evaporating coil of the circuit C2 and the evaporating coil of the circuit C3, in order to be subsequently distributed again uniformly in order to pass through the condensing coil of the circuit C1 and the condensing coil of the circuit C2, in order to pass subsequently through the evaporating/condensing coil of the recovery circuit CR, in order to pass subsequently through the hot water backup unit, in order to be finally driven to the enclosure of the indoor swimming pool by the supply fans.

The mentioned refrigeration circuits in addition comprise components such as reboiler, dehydrating filters, pressure switches, pressure sensors, temperature sensors, coolant filling valves and other common elements of refrigeration circuits located in the different pipe sections.

This is done in such a manner that, in the new heat pump for swimming pools with recovery of heat from the extraction air and dissipation of heat to the extraction air by means of a mechanical compression refrigeration circuit and a regulating method, the air mixture passes through the evaporating coils of the circuits C1, C2 and C3, while the dehumidification thereof occurs, and subsequently it passes through the condensing coils of the circuits C1, C2, while the recovery of the condensation heat occurs in order to preheat said air mixture. Furthermore, in the condensing heat exchanger, the recovery of the condensation heat of the circuit C3 occurs in order to heat the water of the swimming pool.

The dehumidified and preheated air mixture passes through the condensing/evaporating coil of the recovery circuit CR. The reversibility of this refrigeration circuit makes it possible to provide an additional refrigeration and dehumidification capacity by dissipating heat to the extraction air or by recovering heat from the extraction air, providing additional heating of the treated air.

Finally, a heating water backup unit contributes additional heating, usually required in these installations.

The electronic control device is configured with an automatic regulating method which, when executed, enables the heat pump to operate in a configuration referred to as Dehumidification and Heat configuration, in which, when the environment of the swimming pool needs the addition of heat, the electronic control device regulates the relative humidity of the ambient air, by actuating the refrigerating circuits C3, C2 and C1, and simultaneously it regulates the temperature of the ambient air by actuating the recovery circuit CR in the heating mode, that is to say by evaporating over the extraction air and by actuating the contribution of heat in the backup unit.

In said configuration, the electronic control device receives the value measured by the ambient air temperature sensor and compares it with an established set-point value of the refrigeration temperature and it also receives the value measured by the ambient air humidity sensor and compares it with established set-point values of the humidity and of the heating humidity range, in such a manner that, if the value measured by the ambient air temperature sensor is less than the temperature set-point value of the ambient heating temperature value, and the value measured by the ambient air humidity sensor is greater than the set-point value of the humidity plus one third of the heating humidity range, it actuates the compressor of the circuit C3, if the value measured by the ambient air humidity sensor is greater than the set-point value of the humidity plus two thirds of the heating humidity range, it actuates the compressor of the circuit C2, and, if the value measured by the ambient air humidity sensor is greater than the set-point value of the humidity plus the heating humidity range, it actuates the compressor of the circuit C1, and simultaneously the electronic control device receives the value measured by the ambient air temperature sensor and compares it with established set-point values of the heating temperature, of the heating temperature range, of the hot water backup displacement and of the hot water backup range, in such a manner that, if the value measured by the ambient air temperature sensor is less than the set-point value of the heating temperature minus the value of the heating temperature range, it actuates the reversing valve of the recovery circuit CR and the compressor of the recovery circuit, and if the value measured by the ambient air temperature sensor is between the set-point value of the heating temperature minus the value of the heating temperature range and between the set-point value of the heating temperature minus the value of the hot water backup displacement plus the value of the hot water backup range, it actuates the 3-way valve of the hot water backup unit between 100% opening and 0% opening in a proportional manner in an ambient temperature range having the value of the hot water backup range.

The electronic control device may be configured with an automatic regulating method which, when executed, enables the heat pump to operate in a configuration referred to as Dehumidification and Cold configuration, in which, when the temperature of environment of the swimming pool needs to be reduced, the electronic control device regulates the relative humidity of the ambient air by actuating the refrigeration circuits C3, CR, C1 and C2, and simultaneously it regulates the temperature of the ambient air by actuating the circuit C3 and the recovery circuit CR in the refrigeration mode, that is to say by condensing over the extraction air.

In said configuration, the electronic control device receives the value measured by the ambient air temperature sensor and compares it with an established set-point value of the refrigeration temperature and it also receives the value measured by the ambient air humidity sensor and compares it with established set-point values of the humidity and set-point values of the refrigeration humidity range, in such a manner that, if the value measured by the ambient air temperature sensor is greater than the set-point value of the refrigeration temperature, it regulates the ambient air relative humidity according to the following logic: if the value measured by the ambient air humidity sensor is greater than the set-point value of the humidity plus one fourth of the refrigeration humidity range, it actuates the compressor of the circuit C3, if the value measured by the ambient air humidity sensor is greater than the set-point value of the humidity plus two quarters of the refrigeration humidity range, it actuates the compressor of the recovery circuit, and, if the value measured by the ambient air humidity sensor is greater than the set-point value of the humidity plus three quarters of the refrigeration humidity range, it actuates the compressor of the circuit C1, and, if the value measured by the ambient air humidity sensor is greater than the set-point value of the humidity plus the refrigeration humidity range, it actuates the compressor of the circuit C2 and simultaneously regulates the temperature of the ambient air according to the following logic: if the value measured by the ambient air temperature sensor is greater than the set-point value of the refrigeration temperature plus half of the value of the refrigeration temperature range, it actuates the compressor of the circuit C3, and, if the value measured by the ambient air temperature sensor is greater than the set-point value of the refrigeration temperature plus the value of the refrigeration temperature range, it actuates the compressor of the recovery circuit.

The electronic control device may be configured with an automatic regulating method which, when executed, enables the heat pump to operate in a configuration referred to as free Dehumidification and Heat configuration, in which, when the environment of the swimming pool needs the contribution of heat, the electronic control device regulates the relative humidity of the ambient air by actuating the refrigeration circuits C3, C2 and C1 and increasing the flow of ventilation air, including up to 100%, by means of the coordinated actuation of the extraction air gate and of the ventilation air gate, and simultaneously it regulates the temperature of the ambient air by actuating the recovery circuit CR in the heating mode, that is to say evaporating over the extraction air and actuating the contribution of heat in the backup unit.

In this configuration, the electronic control device receives the humidity and temperature values of the ventilation air, measured by the ventilation air temperature sensor and the ventilation air humidity sensor, receives the value measured by the ambient air temperature sensor, and it also receives the value measured by the ambient air humidity sensor, and, if the absolute humidity and the enthalpy of said ventilation air are less than the absolute humidity and the enthalpy of the ambient air, and, if the value measured by the ambient air temperature sensor is less than the set-point value of the heating temperature, it regulates the relative humidity of the ambient air according to the following logic: if the value measured by the ambient air humidity sensor is greater than the set-point value of the humidity plus one third of the heating humidity range, it actuates the compressor of the circuit C3, if the value measured by the ambient air humidity sensor is greater than the set-point value of the humidity plus two thirds of the heating humidity range, it actuates the compressor of the circuit C2, if the value measured by the ambient air humidity sensor is greater than the set-point value of the humidity plus the heating humidity range, it actuates the compressor of the circuit C1, and, if the value measured by the ambient air humidity sensor is between the set-point value of the humidity plus the heating humidity range and the set-point value of the humidity plus the heating humidity range plus a free winter dehumidification displacement value minus a free winter dehumidification range value, it increases the flow of ventilation air in a proportional manner between 0% and 100% in a humidity range having the value of the free winter dehumidification range, by means of the coordinated actuation of the extraction air gate and ventilation air gate, and simultaneously it regulates the temperature of the ambient air according to the following logic: the electronic control device compares the value measured by the ambient air temperature sensor with established set-point values of the heating temperature, of the heating temperature range, of the hot water backup displacement and of the hot water backup range, in such a manner that, if the value measured by the ambient air temperature sensor is less than the set-point value of the heating temperature minus the value of the heating temperature range, it actuates the reversing valve of the recovery circuit CR and the compressor of the recovery circuit, and, if the value measured by the ambient air temperature sensor is between the set-point value of the heating temperature minus the value of the heating temperature range and between the set-point value of the heating temperature minus the value of the hot water backup displacement plus the value of the hot water backup range, it actuates the 3-way valve of the hot water backup unit in a proportional manner between 100% opening and 0% opening in an ambient temperature range having the value of the hot water backup range.

The electronic control device may be configured with an automatic regulating method which, when executed, enables the heat pump to operate in a configuration referred to as free Dehumidification and Cold configuration, in which, when the temperature of environment of the swimming pool needs to be decreased, the electronic control device regulates the relative humidity of the ambient air by increasing the flow of ventilation air, including up to 100%, by means of the coordinated actuation of the extraction air gate and of the ventilation air gate, and by actuating the refrigeration circuits C3, CR, C1 and C2, and simultaneously it regulates the temperature of the ambient air by actuating the circuit C3 and the recovery circuit CR in the refrigeration mode, that is to say by condensing over the extraction air.

In this configuration, the electronic control device receives the humidity and temperature values of the ventilation air, measured by the ventilation air temperature sensor and the ventilation air humidity sensor, it receives the value measured by the ambient air temperature sensor, and it also receives the value measured by the ambient air humidity sensor, and, if the absolute humidity and the enthalpy of said ventilation air are less than the absolute humidity and the enthalpy of the ambient air, and, if the value measured by the ambient air temperature sensor is greater than the set-point value of the refrigeration temperature, it regulates the relative humidity of the ambient air according to the following operating logic: if the value measured by the ambient air humidity sensor is between the set-point value of the humidity minus a free summer dehumidification displacement value and between the set-point value of the humidity minus a free summer dehumidification displacement value plus a value of the free summer dehumidification range, it increases the flow of ventilation air in a proportional manner between 0% and 100% in a range having the value of the free summer dehumidification range, by means of the coordinated actuation of the extraction air gate and the ventilation air gate, and, if the value measured by the ambient air humidity sensor is greater than the set-point value of the humidity plus one quarter of the refrigeration humidity range, it actuates the compressor of the circuit C3, if the value measured by the ambient air humidity sensor is greater than the set-point value of the humidity plus two quarters of the refrigeration humidity range, it actuates the compressor of the recovery circuit, if the value measured by the ambient air humidity sensor is greater than the set-point value of the humidity plus three quarters of the refrigeration humidity range, it actuates the compressor of the circuit C1, and, if the value measured by the ambient air humidity sensor is greater than the set-point value of the humidity plus the refrigeration humidity range, it actuates the compressor of the circuit C2 and simultaneously regulates the temperature of the ambient air according to the following logic: if the value measured by the ambient air temperature sensor is greater than the set-point value of the refrigeration temperature plus half of the refrigeration temperature range, it actuates the compressor of the circuit C3, and, if the value measured by the ambient air temperature sensor is greater than the set-point value of the refrigeration temperature plus the value of the refrigeration temperature range, it actuates the compressor of the recovery circuit.

The electronic control device may be configured with an automatic regulating method which, when executed, enables the heat pump to operate in a configuration referred to as Dehumidification and Free Cold configuration, in which, when the temperature of the environment of the swimming pool needs to be decreased, the electronic control device regulates the relative humidity of the ambient air by actuating the refrigeration circuits C3, CR, C1 and C2, and simultaneously it regulates the temperature of the ambient air by increasing the flow of ventilation air, including up to 100%, by means of the coordinated actuation of the extraction air gate and of the ventilation air gate by actuating the circuit C3 and the recovery circuit CR in the refrigeration mode, that is to say by condensing over the extraction air.

In this configuration, the electronic control device receives the humidity value and the value of the temperature of the ventilation air, measured by the ventilation air temperature sensor and the ventilation air humidity sensor, it receives the value measured by the ambient air temperature sensor, and it also receives the value measured by the ambient air humidity sensor, and, if the temperature of said ventilation air is less than the temperature of the ambient air, or, alternatively, if both the temperature of said ventilation air and the enthalpy are less than those of the ambient air, and, if the value measured by the ambient air temperature sensor is greater than the set-point value of the refrigeration temperature, it regulates the relative humidity of the ambient air according to the following logic: if the value measured by the ambient air humidity sensor is greater than the set-point value of the humidity plus one quarter of the refrigeration humidity range, it actuates the compressor of the circuit C3, if the value measured by the ambient air humidity sensor is greater than the set-point value of the humidity plus two quarters of the refrigeration humidity band, it actuates the compressor of the recovery circuit, if the value measured by the ambient air humidity sensor is greater than the set-point value of the humidity plus three quarters of the refrigeration humidity range, it actuates the compressor of the circuit C1, and, if the value measured by the ambient air humidity sensor is greater than the set-point value of the humidity plus the refrigeration humidity band, it actuates the compressor of the circuit C2 and simultaneously regulates the temperature of the ambient air, according to the following logic: if the value measured by the ambient air temperature sensor is between the set-point value of the refrigeration temperature minus a free summer refrigeration displacement value and between the set-point value of the refrigeration temperature range minus a free summer refrigeration displacement value plus a free summer refrigeration band value, it increases the flow of ventilation air in a proportional manner between 0% and 100% in an ambient temperature range having the value of the free summer refrigeration range, and, if the value measured by the ambient air temperature sensor is greater than the set-point value of the refrigeration temperature plus half of the value of the refrigeration temperature range, it actuates the compressor of the circuit C3, and, if the value measured by the ambient air temperature sensor is greater than the set-point value of the refrigeration temperature plus the value of the refrigeration temperature range, it actuates the compressor of the recovery circuit.

### DESCRIPTION OF THE DRAWINGS

To supplement the description provided, and with the aim of helping to improve the understanding of the features of the invention, in accordance with the preferred practical exemplary embodiments of same, the figure provided below is given as an addition which is an integral part of said description:

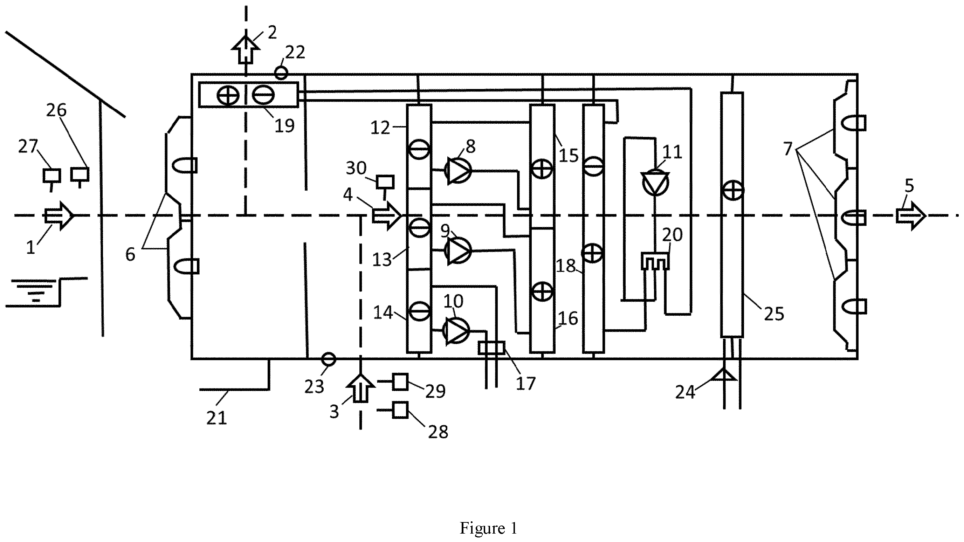

Figure 1. Diagram of the refrigeration circuits, air flows and components that constitute the heat pump for swimming pools with recovery of heat from the extraction air and dissipation of heat to the extraction air by means of a mechanical compression refrigeration circuit.

In the provided figure provided, the following details are shown:
1. Ambient air.
2. Extraction air.
3. Ventilation air.
4. Air mixture.
5. Supply air.
6. Return fans.
7. Supply fans.
8. Compressor of the circuit C1.
9. Compressor of the circuit C2.
10. Compressor of the circuit C3.
11. Compressor of the recovery circuit.
12. Evaporating coil of the circuit C1.
13. Evaporating coil of the circuit C2.
14. Evaporating coil of the circuit C3.
15. Condensing coil of the circuit C1.
16. Condensing coil of the circuit C2.
17. Condensing heat exchanger of the circuit C3.
18. Evaporating/condensing coil of the recovery circuit CR.
19. Condensing/evaporating coil of the recovery circuit CR.
20. Reversing valve of the recovery circuit CR.
21. Electronic control device.
22. Extraction air gate.
23. Ventilation air gate.
24. 3-Way valve of the hot water backup unit.
25. Hot water backup unit.
26. Ambient air temperature sensor.
27. Ambient air humidity sensor.
28. Ventilation air temperature sensor.
29. Ventilation air humidity sensor.
30. Air mixture temperature sensor.

### PREFERRED EXEMPLARY EMBODIMENT

As a preferred exemplary embodiment, the compressors (8), (9), (10) and (11) are of the R-410A coolant scroll type with 10 CV power, the condensing heat exchanger of the circuit C3 (17) is of the type with soldered plates, the evaporating units (12), (13) and (14) are constructed from an assembly of copper tubes
with aluminum fins with anticorrosion protection, the condensing coils (15) and (16) are constructed from an assembly of copper tubes with aluminum fins coated with polyurethane, the condensing/evaporating coil of the recovery circuit CR (19) is a unit of finned copper tubes with aluminum fins with anticorrosion protection, the evaporating/condensing unit of the recovery circuit CR (18) is a finned unit of copper tubes with aluminum fins with anticorrosion protection, the 2 return fans (6) are of the electronically switched radial type having a diameter of 560 mm and 4700 W, the 3 supply fans (7) are of the electronically switched radial type with a diameter of 500 mm and 5500 W. By means of all of them, in the Dehumidification and Heat configuration, a flow of air mixture (4) of 24,000 m3/h is dehumidified at the rate of 73.5 kg/h of water in the evaporators (12), (13) and (14), undergoes preheating of 26.1 kW in the condensers (15) and (16), and heating of 43.3 kW in the evaporating/condensing coil of the recovery circuit CR (18), and the water of the swimming pool is heated in the condensing heat exchanger of the circuit C3 (17) from 28 °C to 33 °C at a power of 43.5 kW.

As already stated, in the Dehumidification and Heat configuration, the electronic control device (21) regulates the relative humidity of the ambient air (1) by actuating the compressors (10), (9) and (8) in this order of actuation, and simultaneously it regulates the temperature of the ambient air (1) by actuating the compressor of the recovery circuit (11) and the reversing valve of the recovery circuit CR (20), so that the condensing/evaporating coil of the recovery circuit CR (19) operates by evaporating over the extraction air and introducing a contribution of heat by actuating the 3-way valve of the hot water backup unit (24) of the hot water backup unit (25), in this order of order of actuation.

If the thermal loads that the enclosure of the swimming pools receives are such that the temperature of the ambient air (1) rises above a pre-established value, the heat pump switches to operating in the configuration referred to as Dehumidification and Cold configuration in which the electronic control device (21) regulates the relative humidity of the ambient air (1) by actuating the compressors (10), (11), (8) and (9) in this order of actuation, and simultaneously it regulates the temperature of the ambient air (1) by actuating the compressor of the circuit C3 (10) and the compressor of the recovery circuit (11), the condensing/evaporating coil of the recovery circuit CR (19) operating by condensing over the extraction air, in this order of actuation.

If the humidity conditions of the outside air are such that the introduction thereof promotes the dehumidification but fails to heat the enclosure, the heat pump switches to operating in a third configuration referred to as Free Dehumidification and Heat configuration, in which, if the absolute humidity and the enthalpy of the ventilation air (3) are less than the absolute humidity and the enthalpy of the ambient air (1), it regulates the relative humidity of the ambient air (1), by actuating the compressors (10), (9) and (8) by increasing the flow of ventilation air, including up to 100%, by means of the coordinated actuation of the extraction air gate (22) and of the ventilation air gate (23), in this order of actuation, and simultaneously it regulates the temperature of the ambient air (1) by actuating the compressor of the recovery circuit (11) and the reversing valve of the recovery circuit CR (20) so that the condensing/evaporating battery of the recovery circuit CR (19) operates by evaporating over the extraction air and by introducing a heat contribution by actuating the 3-way valve of the hot water backup unit (24) of the hot water backup unit (25), in this order of actuation.

If the humidity conditions of the outside air are such that the introduction thereof promotes the dehumidification but fails to cool the enclosure, the heat pump switches to operating in a fourth configuration referred to as Free Dehumidification and Cold configuration, in which the electronic control device (21) regulates the relative humidity of the ambient air (1) by increasing the flow rate of the ventilation air, including up to 100%, by means of the coordinated actuation of the extraction air gate (22) and of the ventilation air gate (23) and by actuating the compressors (10), (11), (8) and (9) in this order of actuation, and simultaneously it regulates the temperature of the ambient air (1) by actuating the compressor of the circuit C3 (10) and the compressor of the recovery circuit (11), the condensing/evaporating unit of the recovery circuit CR (19) operating by condensing over the extraction air, in this order of actuation.

If the temperature conditions of the outside air are such that the introduction thereof makes it possible to contribute refrigeration, or if the temperature conditions of the outside air are such that the introduction thereof makes it possible to decrease the temperature of the air of the enclosure without increasing the enthalpy of the air of the premises, the heat pump switches to operate in a fifth configuration referred to as Dehumidification and Free Cold configuration, in which the electronic control device (21) regulates the relative humidity of the ambient air by actuating the refrigeration circuits C3, CR, C1 and C2, and simultaneously it regulates the temperature of the ambient air by increasing the flow of the ventilation air, including up to 100%, by means of the coordinated actuation of the extraction air gate and of the ventilation air gate by actuating the circuit C3 and the recovery circuit CR in the refrigerating mode, that is to say by condensing over the extraction air.

## Claims

1. A heat pump for swimming pools with recovery of heat from the extraction air and dissipation of heat to the extraction air by means of a mechanical compression refrigeration circuit constructed with:
return fans (6);
supply fans (7);
a refrigeration circuit C1 consisting primarily of a compressor of the circuit C1 (8), an evaporating coil of the circuit C1 (12), a condensing coil of the circuit C1 (15);
a refrigeration circuit C2 consisting primarily of a compressor of the circuit C2 (9), an evaporating coil of the circuit C2 (13), a condensing coil of the circuit C2 (16);
a refrigeration circuit C3 consisting primarily of a compressor of the circuit C3 (10), an evaporating coil of the circuit C3 (14), a condensing heat exchanger of the circuit C3 (17);
a recovery circuit CR consisting primarily of a compressor of the recovery circuit (11), an evaporating/condensing coil of the recovery circuit CR (18), a condensing/evaporating coil of the recovery circuit CR (19), a reversing valve of the recovery circuit CR (20);
an electronic control device (21);
an extraction air gate (22);
a ventilation air gate (23);
a 3-way valve of a hot water backup unit (24) which regulates a heat capacity of a hot water backup unit (25);
an ambient air temperature sensor (26);
an ambient air humidity sensor (27);
a ventilation air temperature sensor (28);
a ventilation air humidity sensor (29);
an air mixture temperature sensor (30);
all arranged in relation to the flows of ambient air (1), extraction air (2), ventilation air (3), air mixture (4) and supply air (5), in such a manner that the ambient air (1) is suctioned by the return fans (6), a fraction of said ambient air being expelled as extraction air (2) through the extraction air gate (2), but passing through the condensing/evaporating coil of the recovery circuit (19) beforehand, in such a manner that the remaining fraction mixes with the ventilation air (3), which enters the machine through the ventilation air gate (23), both air flows forming the air mixture (4), in such a manner that said air mixture is distributed uniformly in order to pass through the evaporating coil of the circuit C1 (12), the evaporating coil of the circuit C2 (13) and the evaporating coil of the circuit C3 (14), in order to be subsequently distributed again uniformly in order to pass through the condensing coil of the circuit C1 (15) and the condensing coil of the circuit C2 (16), in order to pass subsequently through the evaporating/condensing coil of the recovery circuit CR (18), in order to pass subsequently through the hot water backup unit (25), in order to be finally driven to the enclosure of the indoor swimming pool by the supply fans, the heat pump being **characterized in that**:
the electronic control device (21) is configured with an automatic regulating method which, when executed, enables the heat pump to operate in a configuration referred to as Dehumidification and Heat configuration in which:
the electronic control device (21) receives a value measured by the ambient air temperature sensor (26) and compares it with an established heating temperature set-point value, and it also receives a value measured by the ambient air humidity sensor (27) and compares it with established set-point values of a humidity and of a heating humidity range, in such a manner that:
if the value measured by the ambient air temperature sensor (26) is less than the temperature set-point value of the ambient heating temperature value, and the value measured by the ambient air humidity sensor (27) is greater than the set-point value of the humidity plus one third of the heating humidity range, it actuates the compressor of the circuit C3 (10);
if the value measured by the ambient air humidity sensor (27) is greater than the set-point value of the humidity plus two thirds of the heating humidity range, it actuates the compressor of the circuit C2 (9); and
if the value measured by the ambient air humidity sensor (27) is greater than the set-point value of the humidity plus the heating humidity range, it actuates the compressor of the circuit C1 (8);
and simultaneously the electronic control device (21) receives the value measured by the ambient air temperature sensor (26) and compares it with established set-point values of the heating temperature, of a heating temperature range, of a hot water backup displacement and of a hot water backup range, in such a manner that:
if the value measured by the ambient air temperature sensor (26) is less than the set-point value of the heating temperature minus the value of the heating temperature range, it actuates the reversing valve of the recovery circuit CR (20) and the compressor of the recovery circuit (11); and
if the value measured by the ambient air temperature sensor (26) is between the set-point value of the heating temperature minus the value of the heating temperature range and between the set-point value of the heating temperature minus the value of the hot water backup displacement plus the value of the hot water backup range, it actuates the 3-way valve of the hot water backup unit (24) between 100% opening and 0% opening in a proportional manner in an ambient temperature range having the value of the hot water backup range.

2. The heat pump according to Claim 1, wherein the electronic control device (21) is further configured with an automatic regulating method which, when executed, enables the heat pump to operate in a configuration referred to as Dehumidification and Cold configuration in which:
the electronic control device (21) receives the value measured by the ambient air temperature sensor (26) and compares it with an established set-point value of a refrigeration temperature and it also receives the value measured by the ambient air humidity sensor (27) and compares it with established set-point values of the humidity and set-point values of a refrigeration humidity range, in such a manner that, if the value measured by the ambient air temperature sensor (26) is greater than the set-point value of the refrigeration temperature, it regulates the ambient air relative humidity (1) according to the following logic:
if the value measured by the ambient air humidity sensor (27) is greater than the set-point value of the humidity plus one fourth of the refrigeration humidity range, it actuates the compressor of the circuit C3 (10);
if the value measured by the ambient air humidity sensor (27) is greater than the set-point value of the humidity plus two quarters of the refrigeration humidity range, it actuates the compressor of the recovery circuit (11); and
if the value measured by the ambient air humidity sensor (27) is greater than the set-point value of the humidity plus three quarters of the refrigeration humidity range, it actuates the compressor of the circuit C1 (8), and, if the value measured by the ambient air humidity sensor (27) is greater than the set-point value of the humidity plus the refrigeration humidity range, it actuates the compressor of the circuit C2 (9);
and simultaneously the electronic control device (21) regulates the temperature of the ambient air (1) according to the following logic:
if the value measured by the ambient air temperature sensor (26) is greater than the set-point value of the refrigeration temperature plus half of the value of the refrigeration temperature range, it actuates the compressor of the circuit C3 (10); and
if the value measured by the ambient air temperature sensor (26) is greater than the set-point value of the refrigeration temperature plus the value of the refrigeration temperature range, it actuates the compressor of the recovery circuit (11).

3. The heat pump according to Claims 1 and 2, wherein the electronic control device (21) is further configured with an automatic regulating method which, when executed, enables the heat pump to operate in a configuration referred to as Free Dehumidification and Heat configuration in which:
the electronic control device (21) receives humidity and temperature values of the ventilation air (3), measured by the ventilation air temperature sensor (28) and the ventilation air humidity sensor (29), receives the value measured by the ambient air temperature sensor (26), and it also receives the value measured by the ambient air humidity sensor (27), and, if an absolute humidity and an enthalpy of said ventilation air (3) are less than an absolute humidity and an enthalpy of the ambient air (1), and, if the value measured by the ambient air temperature sensor (26) is less than the set-point value of the heating temperature, it regulates a relative humidity of the ambient air (1) according to the following logic:
if the value measured by the ambient air humidity sensor (27) is greater than the set-point value of the humidity plus one third of the heating humidity range, it actuates the compressor of the circuit C3 (10);
if the value measured by the ambient air humidity sensor (27) is greater than the set-point value of the humidity plus two thirds of the heating humidity range, it actuates the compressor of the circuit C2 (9);
if the value measured by the ambient air humidity sensor (27) is greater than the set-point value of the humidity plus the heating humidity range, it actuates the compressor of the circuit C1 (8); and
if the value measured by the ambient air humidity sensor (27) is between the set-point value of the humidity plus the heating humidity range and the set-point value of the humidity plus the heating humidity range plus a free winter dehumidification displacement value minus a free winter dehumidification range value, it increases the flow of ventilation air in a proportional manner between 0% and 100% in a humidity range having the value of the free winter dehumidification range, by means of the coordinated actuation of the extraction air gate (22) and ventilation air gate (23);
and simultaneously the electronic controller device (21) regulates the temperature of the ambient air (1) according to the following logic: the electronic control device (21) compares the value measured by the ambient air temperature sensor (26) with established set-point values of the heating temperature, of the heating temperature range, of the hot water backup displacement and of the hot water backup range, in such a manner that:
if the value measured by the ambient air temperature sensor (26) is less than the set-point value of the heating temperature minus the value of the heating temperature range, it actuates the reversing valve of the recovery circuit CR (20) and the compressor of the recovery circuit (11); and
if the value measured by the ambient air temperature sensor (26) is between the set-point value of the heating temperature minus the value of the heating temperature range and between the set-point value of the heating temperature minus the value of the hot water backup displacement plus the value of the hot water backup range, it actuates the 3-way valve of the hot water backup unit (24) in a proportional manner between 100% opening and 0% opening in an ambient temperature range having the value of the hot water backup range.

4. The heat pump according to Claims 1, 2 and 3, wherein the electronic control device (21) is further configured with an automatic regulating method which, when executed, enables the heat pump to operate in a configuration referred to as Free Dehumidification and Cold configuration in which:
the electronic control device (21) receives the humidity and temperature values of the ventilation air (3), measured by the ventilation air temperature sensor (28) and the ventilation air humidity sensor (29), it receives the value measured by the ambient air temperature sensor (26), and it also receives the value measured by the ambient air humidity sensor (27), and, if the absolute humidity and the enthalpy of said ventilation air (3) are less than the absolute humidity and the enthalpy of the ambient air (1), and, if the value measured by the ambient air temperature sensor (26) is greater than the set-point value of the refrigeration temperature, it regulates the relative humidity of the ambient air (1) according to the following operating logic:
if the value measured by the ambient air humidity sensor (27) is between the set-point value of the humidity minus a free summer dehumidification displacement value and between the set-point value of the humidity minus the free summer dehumidification displacement value plus a value of the free summer dehumidification range, it increases the flow of ventilation air (3) in a proportional manner between 0% and 100% in a range having the value of the free summer dehumidification range, by means of the coordinated actuation of the extraction air gate (22) and the ventilation air gate (23);
if the value measured by the ambient air humidity sensor (27) is greater than the set-point value of the humidity plus one quarter of the refrigeration humidity range, it actuates the compressor of the circuit C3 (10);
if the value measured by the ambient air humidity sensor (27) is greater than the set-point value of the humidity plus two quarters of the refrigeration humidity range, it actuates the compressor of the recovery circuit (11);
if the value measured by the ambient air humidity sensor (27) is greater than the set-point value of the humidity plus three quarters of the refrigeration humidity range, it actuates the compressor of the circuit C1 (8);, and
if the value measured by the ambient air humidity sensor (27) is greater than the set-point value of the humidity plus the refrigeration humidity range, it actuates the compressor of the circuit C2 (9) and simultaneously regulates the temperature of the ambient air (1) according to the following logic:
if the value measured by the ambient air temperature sensor (26) is greater than the set-point value of the refrigeration temperature plus half of the refrigeration temperature range, it actuates the compressor of the circuit C3 (10); and
if the value measured by the ambient air temperature sensor (26) is greater than the set-point value of the refrigeration temperature plus the value of the refrigeration temperature range, it actuates the compressor of the recovery circuit (11).

5. The heat pump according to Claims 1, 2, 3 and 4, wherein the electronic control device (21) is further configured with an automatic regulating method which, when executed, enables the heat pump to operate in a configuration referred to as Dehumidification and Free Cold configuration in which:
the electronic control device (21) receives the humidity value and the value of the temperature of the ventilation air (3), measured by the ventilation air temperature sensor (28) and the ventilation air humidity sensor (29), it receives the value measured by the ambient air temperature sensor (26), and it also receives the value measured by the ambient air humidity sensor (27), and, if the temperature of said ventilation air (3) is less than the temperature of the ambient air (1), or, alternatively, if both the temperature of said ventilation air (3) and the enthalpy are less than those of the ambient air (3), and, if the value measured by the ambient air temperature sensor (26) is greater than the set-point value of the refrigeration temperature, it regulates the relative humidity of the ambient air (1) according to the following logic:
if the value measured by the ambient air humidity sensor (27) is greater than the set-point value of the humidity plus one quarter of the refrigeration humidity range, it actuates the compressor of the circuit C3 (10);
if the value measured by the ambient air humidity sensor (27) is greater than the set-point value of the humidity plus two quarters of the refrigeration humidity band, it actuates the compressor of the recovery circuit (11);
if the value measured by the ambient air humidity sensor (27) is greater than the set-point value of the humidity plus three quarters of the refrigeration humidity range, it actuates the compressor of the circuit C1 (8); and
if the value measured by the ambient air humidity sensor (27) is greater than the set-point value of the humidity plus the refrigeration humidity band, it actuates the compressor of the circuit C2 (9);
and simultaneously the electronic controller device (21) regulates the temperature of the ambient air (1), according to the following logic:
if the value measured by the ambient air temperature sensor (26) is between the set-point value of the refrigeration temperature minus a free summer refrigeration displacement value and between the set-point value of the refrigeration temperature range minus the free summer refrigeration displacement value plus a free summer refrigeration band value, it increases the flow of ventilation air (3) in a proportional manner between 0% and 100% in an ambient temperature range having the value of the free summer refrigeration range;
if the value measured by the ambient air temperature sensor (26) is greater than the set-point value of the refrigeration temperature plus half of the value of the refrigeration temperature range, it actuates the compressor of the circuit C3 (10); and
if the value measured by the ambient air temperature sensor (26) is greater than the set-point value of the refrigeration temperature plus the value of the refrigeration temperature range, it actuates the compressor of the recovery circuit (11).

## Patentansprüche

1. Wärmepumpe für Schwimmbecken mit Wärmerückgewinnung aus der Extraktionsluft und Wärmeableitung zu der Extraktionsluft mittels eines mechanischen Kompressionskühlkreislaufs, der gebaut ist mit:
Rücklüftern (6);
Versorgungslüftern (7);
einem Kühlkreislauf C1, der hauptsächlich aus einem Kompressor des Kreislaufs C1 (8), einer Verdampfungsschlange des Kreislaufs C1 (12) und einer Kühlschlange des Kreislaufs C1 (15) besteht;
einem Kühlkreislauf C2, der hauptsächlich aus einem Kompressor des Kreislaufs C2 (9), einer Verdampfungsschlange des Kreislaufs C2 (13) und einer Kühlschlange des Kreislaufs C2 (16) besteht;
einem Kühlkreislauf C3, der hauptsächlich aus einem Kompressor des Kreislaufs C3 (10), einer Verdampfungsschlange des Kreislaufs C3 (14) und einem Kondensationswärmetauscher des Kreislaufs C3 (17) besteht;
einem Rückgewinnungskreislauf CR, der hauptsächlich aus einem Kompressor des Rückgewinnungskreislaufs (11) besteht, einer Verdampfungs-/Kühlschlange des Rückgewinnungskreislaufs CR (18), einer Kühl-/Verdampfungsschlange des Rückgewinnungskreislaufs CR (19), einem Umkehrventil des Rückgewinnungskreislaufs CR (20) besteht;
einer elektronischen Steuervorrichtung (21);
einer Extraktionsluftschleuse (22);
einer Belüftungsluftschleuse (23);
einem Dreiwegeventil einer Heißwasserreserveeinheit (24), die eine Wärmekapazität einer Heißwasserreserveeinheit (25) regelt;
einem Umgebungslufttemperatursensor (26);
einem Umgebungsluftfeuchtigkeitssensor (27);
einem Belüftungslufttemperatursensor (28);
einem Belüftungsluftfeuchtigkeitssensor (29);
einem Luftgemischtemperatursensor (30);
die alle in Bezug auf Ströme von Umgebungsluft (1), Extraktionsluft (2), Belüftungsluft (3), Luftgemisch (4) und Versorgungsluft (5) derart eingerichtet sind, dass die Umgebungsluft (1) von den Rücklüftern (6) angesaugt wird, ein Anteil der Umgebungsluft als Extraktionsluft (2) durch die Extraktionsluftschleuse (2) ausgestoßen wird, aber davor durch die Kühl-/Verdampfungsschlange des Rückgewinnungskreislaufs (19) derart durchgeht, dass sich der verbleibende Anteil mit der Belüftungsluft (3) vermischt, die in die Maschine durch die Belüftungsluftschleuse (23) eintritt, wobei beide Ströme das Luftgemisch (4) derart bilden, dass das Luftgemisch gleichmäßig verteilt wird, um durch die Verdampfungsschlange des Kreislaufs C1 (12), die Verdampfungsschlange des Kreislaufs C2 (13) und die Verdampfungsschlange des Kreislaufs C3 (14) durchzugehen, um anschließend wieder gleichmäßig verteilt zu werden, um durch die Kühlschlange des Kreislaufs C1 (15) und die Kühlschlange des Kreislaufs C2 (16) durchzugehen, um anschließend durch die Verdampfungs-/Kühlschlange des Rückgewinnungskreislaufs CR (18) durchzugehen, um anschließend durch die Heißwasserreserveeinheit (25) durchzugehen, um schließlich von den Versorgungsgebläsen zu dem Einschluss des Hallenbades getrieben zu werden, wobei die Wärmepumpe **dadurch gekennzeichnet ist, dass**:
die elektronische Steuereinheit (21) mit einem automatischen Regelungsverfahren konfiguriert ist, das, wenn es ausgeführt wird, es der Wärmepumpe ermöglicht, in einer Konfiguration zu arbeiten, die als Entfeuchtungs- und Wärmekonfiguration bezeichnet wird, bei der:
die elektronische Steuereinheit (21) einen Wert empfängt, der von dem Umgebungslufttemperatursensor (26) gemessen wird, und ihn mit einem festgelegten Heiztemperatursollwert vergleicht, und auch einen Wert empfängt, der von dem Umgebungsluftfeuchtigkeitssensor (27) gemessen wird und ihn mit den festgelegten Schwellenwerten eines Feuchtigkeits- und eines Heizfeuchtigkeitsbereichs derart vergleicht, dass sie:
falls der Wert, der von dem Umgebungslufttemperatursensor (26) gemessen wird, kleiner ist als der Temperatursollwert des Umgebungsheiztemperaturwerts, und der Wert, der von dem Umgebungsluftfeuchtigkeitssensor (27) gemessen wird, größer ist als der Sollwert der Feuchtigkeit zuzüglich eines Drittels des Heizfeuchtigkeitsbereichs, sie den Kompressor des Kreislaufs C3 (10) betätigt;
falls der Wert, der von dem Umgebungsluftfeuchtigkeitssensor (27) gemessen wird, größer ist als der Sollwert der Feuchtigkeit zuzüglich zwei Dritteln des Heizfeuchtigkeitbereichs, sie den Kompressor des Kreislaufs C2 (9) betätigt; und
falls der Wert, der von dem Umgebungsluftfeuchtigkeitssensor (27) gemessen wird, größer ist als der Sollwert der Feuchtigkeit zuzüglich des Heizfeuchtigkeitbereichs, sie den Kompressor des Kreislaufs C1 (8) betätigt;
und die elektronische Steuereinheit (21) gleichzeitig den Wert empfängt, der von dem Umgebungslufttemperatursensor (26) gemessen wird und ihn mit festgelegten Sollwerten der Heiztemperatur, eines Heiztemperaturbereichs, einer Heißwasserreserveverschiebung und eines Heißwasserreservebereichs derart vergleicht, dass:
falls der Wert, der von dem Umgebungslufttemperatursensor (26) gemessen wird, kleiner ist als der Sollwert der Heiztemperatur abzüglich des Werts des Heiztemperaturbereichs, sie das Umkehrventil des Rückgewinnungskreislaufs CR (20) und den Kompressor des Rückgewinnungskreislaufs (11) betätigt; und
falls der Wert, der von dem Umgebungslufttemperatursensor (26) gemessen wird, zwischen dem Sollwert der Heiztemperatur abzüglich des Werts des Heiztemperaturbereichs und zwischen dem Sollwert der Heiztemperatur abzüglich des Werts der Heißwasserreserveverschiebung zuzüglich des Werts des Heißwasserreservebereichs liegt, sie das Dreiwegeventil der Heißwasserreserveeinheit (24) zwischen 100 % Öffnung und 0 % Öffnung in einer anteilsmäßigen Art in einem Umgebungstemperaturbereich betätigt, der den Wert des Heißwasserreservebereichs aufweist.

2. Wärmepumpe nach Anspruch 1, wobei die elektronische Steuereinheit (21) mit einem automatischen Regelungsverfahren konfiguriert ist, das, wenn es ausgeführt wird, es der Wärmepumpe ermöglicht, in einer Konfiguration zu arbeiten, die als Entlüftungs- und Kaltkonfiguration bezeichnet wird, bei der:
die elektronische Steuereinheit (21) den Wert, der von dem Umgebungslufttemperatursensor (26) gemessen wird, empfängt und ihn mit einem festgelegten Sollwert einer Kühltemperatur vergleicht, und sie auch den Wert empfängt, der von dem Umgebungsluftfeuchtigkeitssensor (27) gemessen wird, und ihn mit festgelegten Sollwerten der Feuchtigkeit und Sollwerten eines Kühlfeuchtigkeitsbereichs derart vergleicht, dass, falls der Wert, der von dem Umgebungslufttemperatursensor (26) gemessen wird, größer ist als der Sollwert der Kühltemperatur, sie die relative Umgebungsluftfeuchtigkeit (1) gemäß der folgenden Logik regelt:
falls der Wert, der von dem Umgebungsluftfeuchtigkeitssensor (27) gemessen wird, größer ist als der Sollwert der Feuchtigkeit zuzüglich eines Viertels des Kühlfeuchtigkeitsbereichs, sie den Kompressor des Kreislaufs C3 (10) betätigt;
falls der Wert, der von dem Umgebungsluftfeuchtigkeitssensor (27) gemessen wird, größer ist als der Schwellenwert der Feuchtigkeit zuzüglich zwei Vierteln des Kühlfeuchtigkeitsbereichs, sie den Kompressor des Rückgewinnungskreislaufs (11) betätigt; und
falls der Wert, der von dem Umgebungsluftfeuchtigkeitssensor (27) gemessen wird, größer ist als der Sollwert der Feuchtigkeit zuzüglich drei Vierteln des Kühlfeuchtigkeitsbereichs, sie den Kompressor des Kreislaufs C1 (8) betätigt, und, falls der Wert, der von dem Umgebungsluftfeuchtigkeitssensor (27) gemessen wird, größer ist als der Sollwert der Feuchtigkeit zuzüglich des Kühlfeuchtigkeitsbereichs, sie den Kompressor des Kreislaufs C2 (9) betätigt;
und die elektronische Steuereinheit (21) gleichzeitig die Temperatur der Umgebungsluft (1) gemäß der folgenden Logik regelt:
falls der Wert, der von dem Umgebungslufttemperatursensor (26) gemessen wird, größer ist als der Sollwert der Kühltemperatur zuzüglich der Hälfte des Werts des Kühltemperaturbereichs, sie den Kompressor des Kreislaufs C3 (10) betätigt; und falls der Wert, der von dem Umgebungslufttemperatursensor (26) gemessen wird, größer ist als der Sollwert der Kühltemperatur zuzüglich des Werts des Kühltemperaturbereichs, sie den Kompressor des Rückgewinnungskreislaufs (11) betätigt.

3. Wärmepumpe nach Anspruch 1 und 2, wobei die elektronische Steuereinheit (21) weiter mit einem automatischen Regelungsverfahren konfiguriert ist, das, wenn es ausgeführt wird, es der Wärmepumpe ermöglicht, in einer Konfiguration zu arbeiten, die als freie Entfeuchtungs- und Wärmekonfiguration bezeichnet wird, bei der:
die elektronische Steuereinheit (21) Feuchtigkeits- und Temperaturwerte der Belüftungsluft (3) empfängt, die von dem Belüftungslufttemperatursensor (28) und dem Belüftungsluftfeuchtigkeitssensor (29) gemessen werden, den Wert empfängt, der von dem Umgebungslufttemperatursensor (26) gemessen wird, und auch den Wert, der von dem Umgebungsluftfeuchtigkeitssensor (27) gemessen wird, empfängt, und, falls eine absolute Feuchtigkeit und eine Enthalpie der Belüftungsluft (3) kleiner sind als eine absolute Feuchtigkeit und eine Enthalpie der Umgebungsluft (1), und, falls der Wert, der von dem Umgebungslufttemperatursensor (26) gemessen wird, kleiner ist als der Sollwert der Heiztemperatur, sie eine relative Luftfeuchtigkeit der Umgebungstemperatur (1) gemäß der folgenden Logik regelt:
falls der Wert, der von dem Umgebungsluftfeuchtigkeitssensor (27) gemessen wird, größer ist als der Sollwert der Feuchtigkeit zuzüglich eines Drittels des Heizfeuchtigkeitsbereichs, sie den Kompressor des Kreislaufs C3 (10) betätigt;
falls der Wert, der von dem Umgebungsluftfeuchtigkeitssensor (27) gemessen wird, größer ist als der Sollwert der Feuchtigkeit zuzüglich zwei Dritteln des Heizfeuchtigkeitbereichs, sie den Kompressor des Kreislaufs C2 (9) betätigt;
falls der Wert, der von dem Umgebungsluftfeuchtigkeitssensor (27) gemessen wird, größer ist als der Sollwert der Feuchtigkeit zuzüglich des Heizfeuchtigkeitbereichs, sie den Kompressor des Kreislaufs C1 (8) betätigt; und
falls der Wert, der von dem Umgebungsluftfeuchtigkeitssensor (27) gemessen wird, zwischen dem Sollwert der Feuchtigkeit zuzüglich des Heizfeuchtigkeitsbereichs und dem Sollwert der Feuchtigkeit zuzüglich des Heizfeuchtigkeitsbereichs zuzüglich eines freien Winter-Entfeuchtungsverschiebungswerts abzüglich eines freien Winter-Entfeuchtungsbereichswerts liegt, sie den Strom von Belüftungsluft in einer anteilsmäßigen Art zwischen 0 % und 100 % in einem Feuchtigkeitsbereich, der den Wert des freien Winter-Entfeuchtungsbereichs aufweist, mittels der koordinierten Betätigung der Extraktionsluftschleuse (22) und der Belüftungsluftschleuse (23) erhöht;
und gleichzeitig die elektronische Steuereinheit (21) die Temperatur der Umgebungsluft (1) gemäß der folgenden Logik regelt: die elektronische Steuereinheit (21) vergleicht den Wert, der von dem Umgebungslufttemperatur (26) gemessen wird, mit festgelegten Sollwerten der Heiztemperatur, des Heiztemperaturbereichs, der Heißwasserreserveverschiebung und des Heißwasserreservebereichs derart, dass:
falls der Wert, der von dem Umgebungslufttemperatursensor (26) gemessen wird, kleiner ist als der Sollwert der Heiztemperatur abzüglich des Werts des Heiztemperaturbereichs, sie das Umkehrventil des Rückgewinnungskreislaufs CR (20) und den Kompressor des Rückgewinnungskreislaufs (11) betätigt; und
falls der Wert, der von dem Umgebungslufttemperatursensor (26) gemessen wird, zwischen dem Sollwert der Heiztemperatur abzüglich des Werts des Heiztemperaturbereichs und zwischen dem Sollwert der Heiztemperatur abzüglich des Werts der Heißwasserreserveverschiebung zuzüglich des Werts des Heißwasserreservebereichs liegt, sie das Dreiwegeventil der Heißwasserreserveeinheit (24) in einer anteilsmäßigen Art zwischen 100 % Öffnung und 0 % Öffnung in einem Umgebungstemperaturbereich betätigt, der den Wert des Heißwasserreservebereichs aufweist.

4. Wärmepumpe nach den Ansprüchen 1, 2 und 3, wobei die elektronische Steuereinheit (21) weiter mit einem automatischen Regelungsverfahren konfiguriert ist, das, wenn es ausgeführt wird, es der Wärmepumpe ermöglicht, in einer Konfiguration zu arbeiten, die als freie Entfeuchtungs- und Kaltkonfiguration bezeichnet wird, bei der:
die elektronische Steuereinheit (21) die Feuchtigkeits- und Temperaturwerte der Belüftungsluft (3) empfängt, die von dem Belüftungslufttemperatursensor (28) und dem Belüftungsluftfeuchtigkeitssensor (29) gemessen werden, den Wert empfängt, der von dem Umgebungslufttemperatursensor (26) gemessen wird, und auch den Wert, der von dem Umgebungsluftfeuchtigkeitssensor (27) gemessen wird, empfängt, und, falls die absolute Feuchtigkeit und die Enthalpie der Belüftungsluft (3) kleiner sind als eine absolute Feuchtigkeit und eine Enthalpie der Umgebungsluft (1), und, falls der Wert, der von dem Umgebungslufttemperatursensor (26) gemessen wird, größer ist als der Sollwert der Kühltemperatur, sie die relative Luftfeuchtigkeit der Umgebungstemperatur (1) gemäß der folgenden Logik regelt:
falls der Wert, der von dem Umgebungsluftfeuchtigkeitssensor (27) gemessen wird, zwischen dem Sollwert der Feuchtigkeit abzüglich eines freien Sommer-Entfeuchtungsverschiebungswerts und zwischen dem Sollwert der Feuchtigkeit abzüglich des freien Sommer-Entfeuchtungsverschiebungswert zuzüglich eines Werts des freien Sommer-Entfeuchtungsbereichs liegt, sie den Strom von Belüftungsluft (3) in einer anteilsmäßigen Art zwischen 0 % und 100 % in einem Bereich, der den Wert des freien Sommer-Entfeuchtungsbereich aufweist, mittels der koordinierten Betätigung der Extraktionsluftschleuse (22) und der Belüftungsluftschleuse (23) erhöht;
falls der Wert, der von dem Umgebungsluftfeuchtigkeitssensor (27) gemessen wird, größer ist als der Sollwert der Feuchtigkeit zuzüglich eines Viertels des Kühlfeuchtigkeitsbereichs, sie den Kompressor des Kreislaufs C3 (10) betätigt;
falls der Wert, der von dem Umgebungsluftfeuchtigkeitssensor (27) gemessen wird, größer ist als der Schwellenwert der Feuchtigkeit zuzüglich zwei Vierteln des Kühlfeuchtigkeitsbereichs, sie den Kompressor des Rückgewinnungskreislaufs (11) betätigt;
falls der Wert, der von dem Umgebungsluftfeuchtigkeitssensor (27) gemessen wird, größer ist als der Schwellenwert der Feuchtigkeit zuzüglich drei Vierteln des Kühlfeuchtigkeitsbereichs, sie den Kompressor des Kreislaufs C1 (8) betätigt; und
falls der Wert, der von dem Umgebungsluftfeuchtigkeitssensor (27) gemessen wird, größer ist als der Sollwert der Feuchtigkeit zuzüglich des Kühlfeuchtigkeitbereichs, sie den Kompressor des Kreislaufs C2 (9) betätigt und gleichzeitig die Temperatur der Umgebungsluft (1) gemäß der folgenden Logik regelt:
falls der Wert, der von dem Umgebungslufttemperatursensor (26) gemessen wird, größer ist als der Sollwert der Kühltemperatur zuzüglich der Hälfte des Kühltemperaturbereichs, sie den Kompressor des Kreislaufs C3 (10) betätigt; und
falls der Wert, der von dem Umgebungslufttemperatursensor (26) gemessen wird, größer ist als der Sollwert der Kühltemperatur zuzüglich des Werts des Kühltemperaturbereichs, sie den Kompressor des Rückgewinnungskreislaufs (11) betätigt.

5. Wärmepumpe nach den Ansprüchen 1, 2, 3 und 4, wobei die elektronische Steuereinheit (21) weiter mit einem automatischen Regelungsverfahren konfiguriert ist, das, wenn es ausgeführt wird, es der Wärmepumpe ermöglicht, in einer Konfiguration zu arbeiten, die als Entlüftungs- und freie Kaltkonfiguration bezeichnet wird, bei der:
die elektronische Steuereinheit (21) den Feuchtigkeitswert und den Wert der Temperatur der Belüftungsluft (3) empfängt, die von dem Belüftungslufttemperatursensor (28) und von dem Belüftungsluftfeuchtigkeitssensor (29) gemessen werden, den Wert empfängt, der von dem Umgebungslufttemperatursensor (26) gemessen wird und auch den Wert empfängt, der von dem Umgebungsluftfeuchtigkeitssensor (27) gemessen wird, und, falls die Temperatur der Belüftungsluft (3) kleiner ist als die Temperatur der Umgebungsluft (1), oder, alternativ, falls sowohl die Temperatur der Belüftungsluft (3) als auch die Enthalpie kleiner sind als diejenige der Umgebungsluft (3), und, falls der Wert, der von dem Umgebungslufttemperatursensor (26) gemessen wird, größer ist als der Sollwert der Kühltemperatur, sie die relative Luftfeuchtigkeit der Umgebungsluft (1) gemäß der folgenden Logik regelt:
falls der Wert, der von dem Umgebungsluftfeuchtigkeitssensor (27) gemessen wird, größer ist als der Sollwert der Feuchtigkeit zuzüglich eines Viertels des Kühlfeuchtigkeitsbereichs, sie den Kompressor des Kreislaufs C3 (10) betätigt;
falls der Wert, der von dem Umgebungsluftfeuchtigkeitssensor (27) gemessen wird, größer ist als der Schwellenwert der Feuchtigkeit zuzüglich zwei Vierteln des Kühlfeuchtigkeitsbandes, sie den Kompressor des Rückgewinnungskreislaufs (11) betätigt;
falls der Wert, der von dem Umgebungsluftfeuchtigkeitssensor (27) gemessen wird, größer ist als der Schwellenwert der Feuchtigkeit zuzüglich drei Vierteln des Kühlfeuchtigkeitsbereichs, sie den Kompressor des Kreislaufs C1 (8) betätigt; und
falls der Wert, der von dem Umgebungsluftfeuchtigkeitssensor (27) gemessen wird, größer ist als der Sollwert der Feuchtigkeit zuzüglich des Kühlfeuchtigkeitsbandes, sie den Kompressor des Kreislaufs C2 (9) betätigt;
und die elektronische Steuereinheit (21) gleichzeitig die Temperatur der Umgebungsluft (1) gemäß der folgenden Logik regelt:
falls der Wert, der von dem Umgebungslufttemperatursensor (26) gemessen wird, zwischen dem Sollwert der Kühltemperatur abzüglich eines freien Sommer-Kühlverschiebungswerts und zwischen dem Sollwert des Kühltemperaturbereichs abzüglich des freien Sommer-Kühlverschiebungswert zuzüglich eines freien Sommer-Kühlbandwerts liegt, sie den Strom von Belüftungsluft (3) in einer anteilsmäßigen Art zwischen 0 % und 100 % in einem Umgebungstemperaturbereich, der den Wert des freien Sommer-Kühlbereichs aufweist, erhöht;
falls der Wert, der von dem Umgebungslufttemperatursensor (26) gemessen wird, größer ist als der Sollwert der Kühltemperatur zuzüglich der Hälfte des Werts des Kühltemperaturbereichs, sie den Kompressor des Kreislaufs C3 (10) betätigt; und falls der Wert, der von dem Umgebungslufttemperatursensor (26) gemessen wird, größer ist als der Sollwert der Kühltemperatur zuzüglich des Werts des Kühltemperaturbereichs, sie den Kompressor des Rückgewinnungskreislaufs (11) betätigt.

## Revendications

1. Pompe à chaleur pour piscines avec récupération de chaleur de l'air d'extraction et dissipation de chaleur dans l'air d'extraction au moyen d'un circuit de réfrigération à compression mécanique constitué de :
ventilateurs de retour (6) ;
ventilateurs d'alimentation (7) ;
un circuit de réfrigération C1 se composant principalement d'un compresseur du circuit C1 (8), d'une bobine d'évaporation du circuit C1 (12), d'une bobine de condensation du circuit C1 (15) ;
un circuit de réfrigération C2 se composant principalement d'un compresseur du circuit C2 (9), d'une bobine d'évaporation du circuit C2 (13), d'une bobine de condensation du circuit C2 (16) ;
un circuit de réfrigération C3 se composant principalement d'un compresseur du circuit C3 (10), d'une bobine d'évaporation du circuit C3 (14), d'une bobine de condensation du circuit C3 (17) ;
un circuit de récupération CR se composant principalement d'un compresseur du circuit de récupération (11), d'une bobine d'évaporation/condensation du circuit de récupération CR (18), d'une bobine d'évaporation/condensation du circuit de récupération CR (19), d'une vanne d'inversion du circuit de récupération CR (20) ;
un dispositif de commande électronique (21) ;
un clapet d'air d'extraction (22) ;
un clapet d'air de ventilation (23) ;
une vanne à trois voies d'une unité d'appoint d'eau chaude (24) qui régule une capacité de chaleur d'une unité d'appoint d'eau chaude (25) ;
un capteur de température d'air ambiant (26) ;
un capteur d'humidité d'air ambiant (27) ;
un capteur de température d'air de ventilation (28) ;
un capteur d'humidité d'air de ventilation (29) ;
un capteur de température de mélange d'air (30) ;
tous agencés par rapport aux écoulements d'air ambiant (1), d'air d'extraction (2), d'air de ventilation (3), de mélange d'air (4) et d'air d'alimentation (5), de telle manière que l'air ambiant (1) soit aspiré par les ventilateurs de retour (6), une fraction dudit air ambiant étant expulsée en tant qu'air d'extraction (2) à travers le clapet d'air d'extraction (2), mais passant à travers la bobine de condensation/évaporation du circuit de récupération (19) auparavant, de telle manière que la fraction restante se mélange à l'air de ventilation (3), qui entre dans la machine à travers le clapet d'air de ventilation (23), les deux écoulements d'air formant le mélange d'air (4), de telle manière que ledit mélange d'air soit réparti uniformément afin de passer à travers la bobine d'évaporation du circuit C1 (12), la bobine d'évaporation du circuit C2 (13) et la bobine d'évaporation du circuit C3 (14), afin d'être ensuite réparti uniformément à nouveau pour passer à travers la bobine de condensation du circuit C1 (15) et la bobine de condensation du circuit C2 (16), afin de passer ensuite à travers la bobine d'évaporation/condensation du circuit de récupération CR (18), afin de passer ensuite à travers l'unité d'appoint d'eau chaude (25), afin d'être entraîné enfin jusqu'à l'enceinte de la piscine intérieure par les ventilateurs d'alimentation, la pompe à chaleur étant **caractérisée en ce que** :
le dispositif de commande électronique (21) est configuré avec un procédé de régulation automatique qui, lorsqu'il est exécuté, permet à la pompe à chaleur de fonctionner dans une configuration à laquelle il est fait référence en tant que configuration de déshumidification et de chaleur dans laquelle :
le dispositif de commande électronique (21) reçoit une valeur mesurée par le capteur de température d'air ambiant (26) et la compare à une valeur de consigne de température de chauffage établie, et il reçoit également une valeur mesurée par le capteur d'humidité d'air ambiant (27) et la compare à des valeurs de consigne établies d'une humidité et d'une plage d'humidité de chauffage, de telle manière que :
si la valeur mesurée par le capteur de température d'air ambiant (26) est inférieure à la valeur de consigne de température de la valeur de température de chauffage ambiant, et la valeur mesurée par le capteur d'humidité d'air ambiant (27) est supérieure à la valeur de consigne de l'humidité plus un tiers de la plage d'humidité de chauffage, il actionne le compresseur du circuit C3 (10) ;
si la valeur mesurée par le capteur d'humidité d'air ambiant (27) est supérieure à la valeur de consigne de l'humidité plus deux tiers de la plage d'humidité de chauffage, il actionne le compresseur du circuit C2 (9) ; et
si la valeur mesurée par le capteur d'humidité d'air ambiant (27) est supérieure à la valeur de consigne de l'humidité plus la plage d'humidité de chauffage, il actionne le compresseur du circuit C1 (8) ;
et simultanément le dispositif de commande électronique (21) reçoit la valeur mesurée par le capteur de température d'air ambiant (26) et la compare aux valeurs de consigne établies de la température de chauffage, d'une plage de température de chauffage, d'un déplacement d'appoint d'eau chaude et d'une plage d'appoint d'eau chaude, de telle manière que :
si la valeur mesurée par le capteur de température d'air ambiant (26) est inférieure à la valeur de consigne de la température de chauffage moins la valeur de la plage de température de chauffage, il actionne la vanne d'inversion du circuit de récupération CR (20) et le compresseur du circuit de récupération (11) ; et
si la valeur mesurée par le capteur de température d'air ambiant (26) est entre la valeur de consigne de la température de chauffage moins la valeur de la plage de température de chauffage et entre la valeur de consigne de la température de chauffage moins la valeur du déplacement d'appoint d'eau chaude plus la valeur de la plage d'appoint d'eau chaude, il actionne la vanne à trois voies de l'unité d'appoint d'eau chaude (24) entre 100 % d'ouverture et 0 % d'ouverture d'une manière proportionnelle dans une plage de température ambiante présentant la valeur de la plage d'appoint d'eau chaude.

2. Pompe à chaleur selon la revendication 1, dans laquelle le dispositif de commande électronique (21) est en outre configuré avec un procédé de régulation automatique qui, lorsqu'il est exécuté, permet à la pompe à chaleur de fonctionner dans une configuration à laquelle il est fait référence en tant que configuration de déshumidification et de froid dans laquelle :
le dispositif de commande électronique (21) reçoit la valeur mesurée par le capteur de température d'air ambiant (26) et la compare à une valeur de consigne établie d'une température de réfrigération et il reçoit également la valeur mesurée par le capteur d'humidité d'air ambiant (27) et la compare à des valeurs de consigne établies de l'humidité et des valeurs de consigne d'une plage d'humidité de réfrigération, de telle manière que, si la valeur mesurée par le capteur de température d'air ambiant (26) est supérieure à la valeur de consigne de la température de réfrigération, il régule l'humidité relative d'air ambiant (1) selon la logique suivante :
si la valeur mesurée par le capteur d'humidité d'air ambiant (27) est supérieure à la valeur de consigne de l'humidité plus un quart de la plage d'humidité de réfrigération, il actionne le compresseur du circuit C3 (10) ;
si la valeur mesurée par le capteur d'humidité d'air ambiant (27) est supérieure à la valeur de consigne de l'humidité plus deux quarts de la plage d'humidité de réfrigération, il actionne le compresseur du circuit de récupération (11) ; et
si la valeur mesurée par le capteur d'humidité d'air ambiant (27) est supérieure à la valeur de consigne de l'humidité plus trois quarts de la plage d'humidité de réfrigération, il actionne le compresseur du circuit C1 (8), et si la valeur mesurée par le capteur d'humidité d'air ambiant (27) est supérieure à la valeur de consigne de l'humidité plus la plage d'humidité de réfrigération, il actionne le compresseur du circuit C2 (9) ; et simultanément le dispositif de commande électronique (21) régule la température de l'air ambiant (1) selon la logique suivante :
si la valeur mesurée par le capteur de température d'air ambiant (26) est supérieure à la valeur de consigne de la température de réfrigération plus la moitié de la valeur de la plage de température de réfrigération, il actionne le compresseur du circuit C3 (10) ; et
si la valeur mesurée par le capteur de température d'air ambiant (26) est supérieure à la valeur de consigne de la température de réfrigération plus la valeur de la plage de température de réfrigération, il actionne le compresseur du circuit de récupération (11).

3. Pompe à chaleur selon les revendications 1 et 2, dans laquelle le dispositif de commande électronique (21) est en outre configuré avec un procédé de régulation automatique qui, lorsqu'il est exécuté, permet à la pompe à chaleur de fonctionner dans une configuration à laquelle il est fait référence en tant que configuration de déshumidification libre et de chaleur dans laquelle :
le dispositif de commande électronique (21) reçoit des valeurs d'humidité et de température de l'air de ventilation (3), mesurées par le capteur de température d'air de ventilation (28) et le capteur d'humidité d'air de ventilation (29), reçoit la valeur mesurée par le capteur de température d'air ambiant (26), et il reçoit également la valeur mesurée par le capteur d'humidité d'air ambiant (27), et, si une humidité absolue et une enthalpie dudit air de ventilation (3) sont inférieures à une humidité absolue et à une enthalpie de l'air ambiant (1), et, si la valeur mesurée par le capteur de température d'air ambiant (26) est inférieure à la valeur de consigne de la température de chauffage, il régule une humidité relative de l'air ambiant (1) selon la logique suivante :
si la valeur mesurée par le capteur d'humidité d'air ambiant (27) est supérieure à la valeur de consigne de l'humidité plus un tiers de la plage d'humidité de chauffage, il actionne le compresseur du circuit C3 (10) ;
si la valeur mesurée par le capteur d'humidité d'air ambiant (27) est supérieure à la valeur de consigne de l'humidité plus deux tiers de la plage d'humidité de chauffage, il actionne le compresseur du circuit C2 (9) ;
si la valeur mesurée par le capteur d'humidité d'air ambiant (27) est supérieure à la valeur de consigne de l'humidité plus la plage d'humidité de chauffage, il actionne le compresseur du circuit C1 (8) ; et
si la valeur mesurée par le capteur d'humidité d'air ambiant (27) est entre la valeur de consigne de l'humidité plus la plage d'humidité de chauffage et la valeur de consigne de l'humidité plus la plage d'humidité de chauffage plus une valeur de déplacement de déshumidification hivernale libre moins une valeur de plage de déshumidification hivernale libre, il augmente l'écoulement d'air de ventilation d'une manière proportionnelle entre 0 % et 100 % d'une plage d'humidité présentant la valeur de la plage de déshumidification hivernal libre, au moyen de l'actionnement coordonné du clapet d'air d'extraction (22) et du clapet d'air de ventilation (23) ;
et simultanément le dispositif de commande électronique (21) régule la température de l'air ambiant (1) selon la logique suivante : le dispositif de commande électronique (21) compare la valeur mesurée par le capteur de température d'air ambiant (26) à des valeurs de consigne établies de la température de chauffage, de la plage de température de chauffage, du déplacement d'appoint d'eau chaude et de la plage d'appoint d'eau chaude, de telle manière que :
si la valeur mesurée par le capteur de température d'air ambiant (26) est inférieure à la valeur de consigne de la température de chauffage moins la valeur de la plage de température de chauffage, il actionne la vanne d'inversion du circuit de récupération CR (20) et le compresseur du circuit de récupération (11) ; et
si la valeur mesurée par le capteur de température d'air ambiant (26) est entre la valeur de consigne de la température de chauffage moins la valeur de la plage de température de chauffage et entre la valeur de consigne de la température de chauffage moins la valeur du déplacement d'appoint d'eau chaude plus la valeur de la plage d'appoint d'eau chaude, il actionne la vanne à trois voies de l'unité d'appoint d'eau chaude (24) d'une manière proportionnelle entre 100 % d'ouverture et 0 % d'ouverture dans une plage de température ambiante présentant la valeur de la plage d'appoint d'eau chaude.

4. Pompe à chaleur selon les revendications 1, 2 et 3, dans laquelle le dispositif de commande électronique (21) est en outre configuré avec un procédé de régulation automatique qui, lorsqu'il est exécuté, permet à la pompe à chaleur de fonctionner dans une configuration à laquelle il est fait référence en tant que configuration de déshumidification libre et de froid dans laquelle :
le dispositif de commande électronique (21) reçoit les valeurs d'humidité et de température de l'air de ventilation (3), mesurées par le capteur de température d'air de ventilation (28) et le capteur d'humidité d'air de ventilation (29), il reçoit la valeur mesurée par le capteur de température d'air ambiant (26), et il reçoit également la valeur mesurée par le capteur d'humidité d'air ambiant (27), et, si l'humidité absolue et l'enthalpie dudit air de ventilation (3) sont inférieures à l'humidité absolue et à l'enthalpie de l'air ambiant (1), et, si la valeur mesurée par le capteur de température d'air ambiant (26) est supérieure à la valeur de consigne de la température de réfrigération, il régule l'humidité relative de l'air ambiant (1) selon la logique suivante :
si la valeur mesurée par le capteur d'humidité d'air ambiant (27) est entre la valeur de consigne de l'humidité moins une valeur de déplacement de déshumidification estivale libre et entre la valeur de consigne de l'humidité moins la valeur de déplacement de déshumidification estivale libre plus une valeur de la plage de déshumidification estivale libre, il augmente l'écoulement d'air de ventilation (3) d'une manière proportionnelle entre 0 % et 100 % dans une plage présentant la valeur de la plage de déshumidification estivale libre, au moyen de l'actionnement coordonné du clapet d'air d'extraction (22) et du clapet d'air de ventilation (23) ;
si la valeur mesurée par le capteur d'humidité d'air ambiant (27) est supérieure à la valeur de consigne de l'humidité plus un quart de la plage d'humidité de réfrigération, il actionne le compresseur du circuit C3 (10) ;
si la valeur mesurée par le capteur d'humidité d'air ambiant (27) est supérieure à la valeur de consigne de l'humidité plus deux quarts de la plage d'humidité de réfrigération, il actionne le compresseur du circuit de récupération (11) ;
si la valeur mesurée par le capteur d'humidité d'air ambiant (27) est supérieure à la valeur de consigne de l'humidité plus trois quarts de la plage d'humidité de réfrigération, il actionne le compresseur du circuit C1 (8) ; et
si la valeur mesurée par le capteur d'humidité d'air ambiant (27) est supérieure à la valeur de consigne de l'humidité plus la plage d'humidité de réfrigération, il actionne le compresseur du circuit C2 (9) et simultanément régule la température de l'air ambiant (1) selon la logique suivante :
si la valeur mesurée par le capteur de température d'air ambiant (26) est supérieure à la valeur de consigne de la température de réfrigération plus la moitié de la plage de température de réfrigération, il actionne le compresseur du circuit C3 (10) ; et
si la valeur mesurée par le capteur de température d'air ambiant (26) est supérieure à la valeur de consigne de la température de réfrigération plus la valeur de la plage de température de réfrigération, il actionne le compresseur du circuit de récupération (11).

5. Pompe à chaleur selon les revendications 1, 2, 3 et 4, dans laquelle le dispositif de commande électronique (21) est en outre configuré avec un procédé de régulation automatique qui, lorsqu'il est exécuté, permet à la pompe à chaleur de fonctionner dans une configuration à laquelle il est fait référence en tant que configuration de déshumidification et de froid libre dans laquelle :
le dispositif de commande électronique (21) reçoit la valeur d'humidité et la valeur de la température de l'air de ventilation (3), mesurées par le capteur de température d'air de ventilation (28) et le capteur d'humidité d'air de ventilation (29), il reçoit la valeur mesurée par le capteur de température d'air ambiant (26), et il reçoit également la valeur mesurée par le capteur d'humidité d'air ambiant (27), et, si la température dudit air de ventilation (3) est inférieure à la température de l'air ambiant (1), ou, en variante, si à la fois la température dudit air de ventilation (3) et l'enthalpie sont inférieurs à celles de l'air ambiant (3), et, si la valeur mesurée par le capteur de température d'air ambiant (26) est supérieure à la valeur de consigne de la température de réfrigération, il régule l'humidité relative de l'air ambiant (1) selon la logique suivante :
si la valeur mesurée par le capteur d'humidité d'air ambiant (27) est supérieure à la valeur de consigne de l'humidité plus un quart de la plage d'humidité de réfrigération, il actionne le compresseur du circuit C3 (10) ;
si la valeur mesurée par le capteur d'humidité d'air ambiant (27) est supérieure à la valeur de consigne de l'humidité plus deux quarts de la plage d'humidité de réfrigération, il actionne le compresseur du circuit de récupération (11) ;
si la valeur mesurée par le capteur d'humidité d'air ambiant (27) est supérieure à la valeur de consigne de l'humidité plus trois quarts de la plage d'humidité de réfrigération, il actionne le compresseur du circuit C1 (8) ; et
si la valeur mesurée par le capteur d'humidité d'air ambiant (27) est supérieure à la valeur de consigne de l'humidité plus la plage d'humidité de réfrigération, il actionne le compresseur du circuit C2 (9) ;
et simultanément le dispositif de commande électronique (21) régule la température de l'air ambiant (1) selon la logique suivante :
si la valeur mesurée par le capteur de température d'air ambiant (26) est entre la valeur de consigne de la température de réfrigération moins une valeur de déplacement de réfrigération estivale libre et entre la valeur de consigne de la plage de température de réfrigération moins la valeur de déplacement de réfrigération estivale libre plus une valeur de plage de réfrigération estivale libre, il augmente l'écoulement d'air de ventilation (3) d'une manière proportionnelle entre 0 % et 100 % dans une plage de température ambiante présentant la valeur de la plage de réfrigération estivale libre ;
si la valeur mesurée par le capteur de température d'air ambiant (26) est supérieure à la valeur de consigne de la température de réfrigération plus la moitié de la valeur de la plage de température de réfrigération, il actionne le compresseur du circuit C3 (10) ; et
si la valeur mesurée par le capteur de température d'air ambiant (26) est supérieure à la valeur de consigne de la température de réfrigération plus la valeur de la plage de température de réfrigération, il actionne le compresseur du circuit de récupération (11).
